(19) Europäisches Patentamt
European Patent Office
Office européen des brevets

(11) **EP 0 745 787 B1**

(12) **EUROPÄISCHE PATENTSCHRIFT**

(45) Veröffentlichungstag und Bekanntmachung des Hinweises auf die Patenterteilung:
**01.08.2001   Patentblatt 2001/31**

(51) Int Cl.⁷: **F16H 57/10**, F16H 63/30, F16D 65/20

(21) Anmeldenummer: **96107556.1**

(22) Anmeldetag: **11.05.1996**

(54) **Hydraulische Servoeinrichtung mit Wegausgleich, für Reibungsbremsen zum Schalten eines automatischen Getriebes von Kraftfahrzeugen**

Hydraulic servo device with compensation of play used with friction brakes for shifting automatic transmission of vehicles

Dispositif de servo hydraulique avec compensation de jeu pour freins à friction utilisé dans une transmission automatique de véhicule

(84) Benannte Vertragsstaaten:
**DE FR GB**

(30) Priorität: **03.06.1995  DE 19520447**

(43) Veröffentlichungstag der Anmeldung:
**04.12.1996   Patentblatt 1996/49**

(73) Patentinhaber: **Ford Global Technologies, Inc.**
**Dearborn, Michigan 48126 (US)**

(72) Erfinder:
• **Reichert, Eric**
  **66352 Gro rosseln (DE)**

• **Lauscher, Friedel**
  **52372 Kreuzau-Drove (DE)**

(74) Vertreter: **Messulam, Alec Moses et al**
  **A. Messulam & Co. Ltd.,**
  **43-45 High Road**
  **Bushey Heath, Bushey, Herts WD23 1EE (GB)**

(56) Entgegenhaltungen:
GB-A- 1 077 764      US-A- 2 638 750
US-A- 3 004 390      US-A- 4 428 462
US-A- 4 930 373      US-A- 5 016 521

## EP 0 745 787 B1

**Beschreibung**

Die Erfindung bezieht sich auf eine hyraulische Servo einrichtung mit Wegausgleich, für Reibungsbremsen zum Schalten eines automatischen Getriebes von Kraftfahrzeugen, der im Oberbegriff des Patentanspruches erläuterten Art.

Aus der US-PS 4 428 462 ist eine hydraulische Servo einrichtung mit Wegausgleich für Reibungsbremsen bekannt, bei dem in einem in einem Zylinder angeordneten Hauptkolben in einem kleineren Zylinder ein Ausgleichskolben angeordnet ist, der mit dem Druckraum des Hauptkolbens über eine von einem federbelasteten Kugelventil kontrollierte Öffnung in Verbindung steht.

Die bekannte hydraulische Servo einrichtung mit Wegausgleich für eine Reibungsbremse ist für eine Bakkenbremse eines Eisenbahnfahrzeuges vorgesehen und der im Hauptkolben vorgesehene Ausgleichskolben ist zum Konstanthalten des Bremslüftspieles vorgesehen.

Aus der DE-PS 16 80 596 ist eine hydraulische Servo einrichtung, insbesondere für Reibungsbremsen zum Schalten eines Kraftfahrzeugwechselgetriebes bekannt, bei dem gleichfalls in einem Hauptkolben ein Ausgleichskolben angeordnet ist, der mit dem Druckraum des Hauptkolbens über eine kontrollierte Öffnung in Verbindung steht, dieser Ausgleichskolben soll jedoch als Druckspeicher wirken, der ein Anlegen des Hauptkolbens verzögert.

Die Aufgabe der Erfindung ist es, eine hydraulische Servo einrichtung mit Wegausgleich für Reibungsbremsen zum Schalten eines automatischen Getriebes von Kraftfahrzeugen bereitzustellen, um zum Zeitpunkt einer Schaltung das zum Anlegen einer Reibungsbremse erforderliche Volumen an Druckflüssigkeit gering zu halten, so daß ein unerwünschter Druckabfall durch bereitzustellendes Flüssigkeitsvolumen vermieden werden kann.

Gemäß der Erfindung wird diese Aufgabe gelöst, indem bei einer hydraulischen Servo einrichtung mit Wegausgleich gemäß dem Oberbegriff des Patentanspruches 1 die im Kennzeichenteil des Patentanspruches 1 aufgeführten Maßnahmen angewendet werden.

Dadurch, daß im Hauptkolben eine den Druckraum mit dem Ausgleichsraum verbindende Stufenbohrung angeordnet ist, in der ein Stufenkolben angeordnet ist, der ein Auslaß-Steuerventil für einen Auslaßkanal bildet, über das ein Abströmen von Druckmittel aus dem Ausgleichsraum kontrolliert wird, das Kugelventil im Hauptkolben bei Druckbeaufschlagung vom Druckraum zum Ausgleichsraum hin öffnet und bei Druckbeaufschlagung in umgekehrter Richtung schließt, bei eingeleiteter Druckerhöhung im Druckraum zunächst der Auslaßkanal über den Stufenkolben geschlossen wird und daraufhin der Ausgleichskolben im Zylinder durch das über das Kugelventil einströmende Druckmittel verschoben wird, wobei infolge des durch das Flächenverhältnis (A/Druckraum zu A/Ausgleichsraum) höheren Druckes im Ausgleichsraum das Kugelventil geschlossen wird, so daß bei weiterer Druckerhöhung der Hauptkolben das Bremsband mit Drehmomentkapazität anlegt und bei Druckentlastung im Druckraum der Stufenkolben den Auslaßkanal öffnet und der Hauptkolben durch seine Rückstellfeder und der Ausgleichskolben durch seine Rückstellfeder in ihre Ausgangslagen zurückgeführt werden, kann der Wegausgleich zu Beginn einer Schaltung mit einem geringen Volumen an Druckflüssigkeit bewerkstelligt werden, so daß bei der darauffolgenden Betätigung der Reibungsbremse durch den Hauptkolben kein unerwünschter Druckabfall mehr auftritt.

Die Erfindung wird anhand eines in der beigefügten Zeichnung gezeigten Ausführungsbeispieles näher erläutert. Es zeigt:

Fig. 1    einen vertikalen Teilschnitt durch ein automatisches Getriebe im Bereich eines durch ein hydraulisches Servo mit Wegausgleich anlegbares Bremsband.

Fig. 2    den Teilschnitt nach Fig. 1 bei ausgefahrenem Ausgleichskolben und

Fig. 3    den Teilschnitt nach Fig. 1 bei ausgefahrenem Hauptkolben.

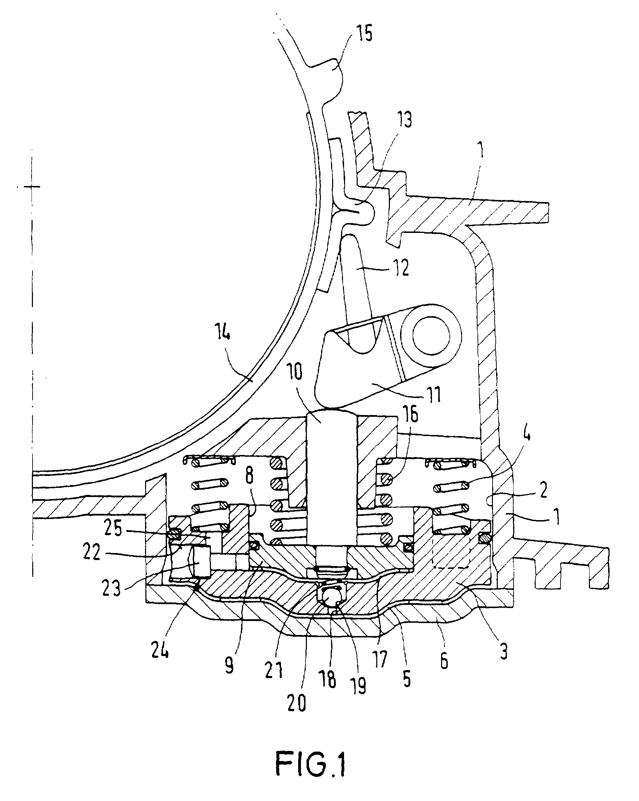

In Fig. 1 ist ein automatisches Getriebe eines Kraftfahrzeuges in einem Teilschnitt gezeigt und weist ein Getriebegehäuse 1 auf, in dessen unterem seitlichen Bereich der Zylinder 2 für einen Hauptkolben 3 der hydraulischen Servo einrichtung ausgebildet ist. Der im Zylinder 2 verschiebbar angeordnete Hauptkolben 3 wird über ein Rückstellfederpaket 4 in Löserichtung der hydraulischen Servo einrichtung belastet. Der Druckraum 5 der hydraulischen Servo einrichtung wird durch ein den Zylinder 2 abschließenden Deckel 6 gebildet. Der Druckraum 5 der hydraulischen Servo einrichtung ist über einen Druckmittelkanal (nicht gezeigt) beaufschlagbar, der im Gehäuse 1 angeordnet ist.

In einem Teil des Hauptkolbens 3 ist ein kleinerer Zylinder 8 für einen Ausgleichskolben 9 angeordnet, wobei vorzugsweise der Ausgleichskolben 9 mit einer Kolbenstange 10 verbunden ist, die über einen Betätigungshebel 11 und ein Abstützglied 12 auf ein Ende 13 eines Bremsbandes 14 einwirkt, dessen anderes Ende 15 in an sich bekannter Weise im Gehäuse 1 (nicht gezeigt) abgestützt ist. Der Ausgleichskolben 9 wird über eine Rückstellfeder 16 in Löserichtung belastet.

Der Zylinder 8 bildet mit dem Ausgleichskolben 9 einen Ausgleichsraum 17, der mit dem Druckraum 5 des Hauptkolbens 3 über eine Bohrung 18 in Verbindung steht, in deren Verlauf ein Ventilsitz 19 für ein ein Kugelventil 20 angeordnet ist.

Der Ausgleichskolben 9 kann wie der Hauptkolben 3 über eine in eine Nut eingelegte Dichtung abgedichtet sein, er kann jedoch auch nur aufgrund einer entsprechenden Passung abgedichtet sein.

Im Hauptkolben 3 ist in einer radialen Stufenbohrung 22, die den Druckraum 5 des Hauptkolbens 3 mit dem Ausgleichsraum 17 verbindet, ein Stufenkolben 23 angeordnet, der mit der Stufenbohrung 22 ein Auslaß-Steuerventil (im folgenden 24 genannt) für einen Auslaßkanal 25 bildet, über das ein Abströmen von Druckmittel aus dem Ausgleichsraum 17 kontrolliert werden kann. Der Ausgleichskolben 9 trägt an seinem unteren Ende eine Feder 21, die die Kugel 20 im Ausgangszustand belastet und sicherstellt, daß zuerst das Auslaß-Steuerventil 23 schließt, bevor die Kugel 19 öffnet. Die Feder 21 ist hierbei in einer Aufnahme im Ende der Kolbenstange 10 eingerastet und die Kugel 20 ist in ihrer Bohrung 18 durch Verstemmen gegen Herausfallen gesichert.

Wird die Betätigung der hydraulischen Servo einrichtung gewünscht, so wird Druckmittel unter Druck über den Anschlußkanal in den Druckraum 5 unterhalb des Hauptkolbens 3 geführt, und das auf das Auslaß-Steuerventil 24 einwirkende Druckmittel verschiebt dessen Stufenkolben 23 radial nach innen in eine Stellung, in der der Auslaßkanal 25 gesperrt wird. Die Schraubendruckfeder 21 wirkt mit geringer Federkraft gegen das Kugelventil 20 und stellt hierbei immer sicher, daß bei Druckbeaufschlagung zuerst das Auslaß-Steuerventil 24 geschlossen wird. Bei niedrigem Druckniveau kann das Druckmittel über die Öffnung 18 und das sich öffnende Kugelventil 20 in den Ausgleichsraum 17 gelangen und den Ausgleichskolben 9 im Zylinder 8 entgegen der Rückstellfeder 16 so weit ausfahren, bis das Bremsband 14 auf den vollen Umfang der Bremstrommel (nicht gezeigt) anliegt.

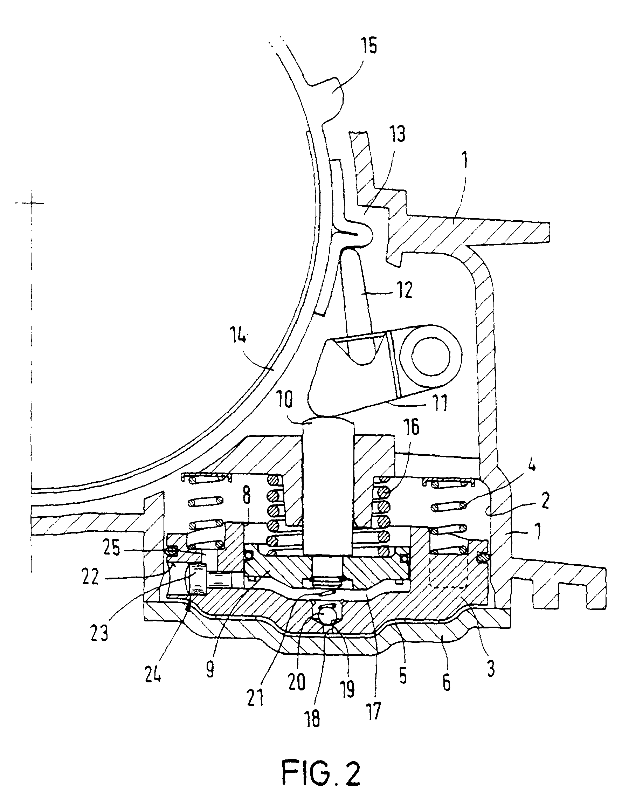

Hierzu ist lediglich ein kleines Volumen an Druckflüssigkeit erforderlich. In dieser Betätigungsphase wird noch keine Kapazität übertragen und der Hauptkolben 3 befindet sich nach wie vor in seiner Ausgangsstellung, in der er durch das Rückstellfederpaket 4 gehalten wird. (Siehe Fig. 2)

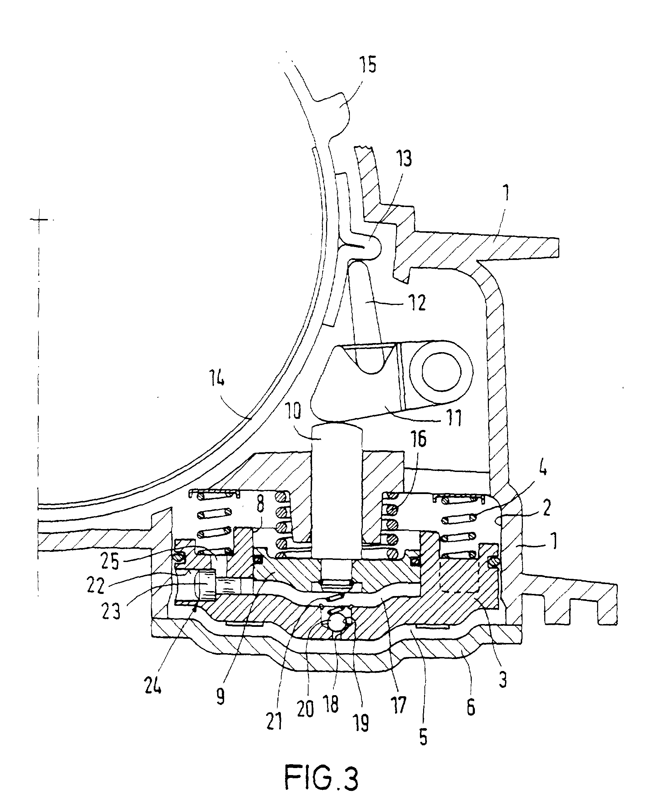

Bei maximal ausgefahrener Kolbenstange 10 und weiterer Druckerhöhung stellt sich im Ausgleichsraum 17 ein dem Flächenverhältnis Ausgleichsraum zu Hauptkolben proportionaler Druck ein. Dieser höhere Druck drückt die Kugel 20 auf ihren Sitz 19 und schließt damit das Volumen im Ausgleichsraum 17 ein. Eine weitere Druckerhöhung wirkt ab diesem Zeitpunkt allein auf die Kolbenfläche des Hauptkolbens 3 und dieser betätigt über die Kolbenstange 10 das Bremsband 14 in der Weise, daß nunmehr eine Drehmoment-Übertragungskapazität zur Verfügung gestellt wird (Siehe Fig. 3).

Zum Lösen des Bremsbandes 14 wird der Druckraum 5 unterhalb des Hauptkolbens 3 entlüftet. Damit sinkt auch der Druck, der auf die größere Fläche des Stufenkolbens 23 wirkt, und der Druck im Ausgleichsraum 17, der auf die kleinere Fläche des Stufenkolbens 23 wirkt, übersteigt den abfallenden Druck im Druckraum 5 und verschiebt den Stufenkolben 23 nach links und öffnet den Auslaßkanal 25. Damit wird auch der Ausgleichsraum 17 entlüftet und die Spreizwirkung des Bremsbandes 14 sowie die Federkraft 16 schiebt die Kolbenstange 10 und den Ausgleichskolben 9 in die Ausgangslage zurück.

Unter Vernachlässigung der Reibungskräfte ergeben sich hierbei folgende Berechnungsgleichungen:

Bedingungen für Spielausgleich:

$$P_{Servo} * A_{Servo} - Feder_{Servo} < P_{Servo} * A_{Ausgleichsraum} - Feder_{Rückstell}$$

Bedingung für Entlüftung:

$$P_{Ausgleichsraum} * A_{2Ventil} > P_{Servo} * A_{1Ventil}$$

$$... \text{mit: } P_{Ausgleichsraum} = \frac{Feder_{Rückstell}}{A_{Ausgleichsraum}}$$

Allgemeine Druckgleichung:

$$P_{Ausgleichsraum} = \frac{P_{Servo} * A_{Servo} - Feder_{Servo}}{A_{Ausgleichsraum}}$$

Sollte das Volumen im Ausgleichsraum 17 infolge Leckage entweichen, so schiebt der Hauptkolben 3 langsam nach bis er am Ausgleichskolben 9 und der Kolbenstange 10 zur Anlage kommt. Dies würde jedoch langsam und mit großer Zeitverzögerung erfolgen, so daß es keinesfalls zu einer unerwünschten Druckabsenkung während des Anlegens des Bremsbandes kommen kann.
Damit bleibt die Beaufschlagung des hydraulischen Servos auch bei Undichtigkeiten im System jederzeit funktionsfähig.

**Patentansprüche**

**1.** Hydraulische Servo einrichtung mit Wegausgleich, für Reibungsbremsen zum Schalten eines automatischen Getriebes von Kraftfahrzeugen, mit einem von einem Zylinder (2) und einem Hauptkolben (3) gebildeten Druckraum (5) und einem von einem kleineren Zylinder (8) im Hauptkolben (3) und einem kleineren Ausgleichskolben (9) gebildeten Ausgleichsraum (17), der mit dem Druckraum (5) über eine von einem durch eine Feder (21) belasteten Kugelventil (20) kontrollierte Öffnung 18 in Verbindung steht,
**dadurch gekennzeichnet**, daß

- im Hauptkolben (3) eine den Druckraum (5) mit dem Ausgleichsraum (17) verbindende Stufenbohrung (22) angeordnet ist, in der ein Stufenkolben (23) angeordnet ist, der ein Auslaß-Steuerventil (24) für einen Auslaßkanal (25) bildet, das ein Abströmen von Druckmittel aus dem Ausgleichsraum (17) kontrolliert,
- das Kugelventil (20) im Hauptkolbens (3) bei Druckbeaufschlagung vom Druckraum (5) zum Ausgleichsraum (17) hin öffnet und bei Druckbeaufschlagung in umgekehrter Richtung schließt,
- bei eingeleiteter Druckerhöhung im Druckraum (5) zunächst der Auslaßkanal (25) über den Stufenkolben (23) geschlossen wird, sichergestellt durch eine Feder (21), und daraufhin der Ausgleichskolben (9) im kleineren Zylinder (8) durch das über das Kugelventil (20) einströmende Druckmittel verschoben wird, wobei infolge des durch das Flächenverhältnis des Druckraums zum Ausgleichsraum höheren Druckes im Ausgleichsraum (17) das Kugelventil (20) geschlossen wird, so daß bei weiterer Druckerhöhung der Hauptkolben (3) die mit einem Bremsband (14) ausgebildete Reibungsbremse mit Drehmomentkapazität anlegt und
- bei Druckentlastung im Druckraum (5) der Stufenkolben (23) den Auslaßkanal (25) öffnet und der Hauptkolben (3) und der Ausgleichskolben (9) in ihre Ausgangslage zurückgeführt werden.

**2.** Hydraulische Servo einrichtung mit Wegausgleich nach Anspruch 1,
**dadurch gekennzeichnet**, daß

- der Hauptkolben (3) durch einen Satz von Rückstell-Schraubenfedern (4) und
- der Ausgleichskolben (9) durch eine Rückstellfeder (16) in ihre Ausgangslagen zurückgeführt werden.

**3.** Hydraulische Servo einrichtung mit Wegausgleich nach den Ansprüchen 1 und 2,
**dadurch gekennzeichnet,** daß

- der Ausgleichskolben (9) mit einer Kolbenstange (10) verbunden ist, wobei an der Verbindungsstelle die als Schraubenfeder ausgebildete Feder (21) zur Belastung des Kugelventiles (20) in der Öffnung (18) im Hauptkolben (3) angeordnet ist.

**Claims**

**1.** Hydraulic servo-device with compensation of play used with friction brakes for shifting automatic transmission of vehicles, with a pressure area (5) formed from a cylinder (2) and a main piston (3) and a compensation area (17) formed from a smaller cylinder (8) in the main piston (3) and a smaller dummy piston (9), whereby the compensation area (17) is connected to the pressure area (5) via an opening (18) controlled by a ball valve (20) burdened by a spring (21)
characterised in that

- in the main piston (3) there is a stepped bore (22) connecting the pressure area (5) to the compensation area (17), whereby in the stepped bore (22) there is a stepped piston (23), which forms an exhaust control valve (24) for an exhaust passage (25), which controls a flow of pressure medium out of the compensation area (17),
- the ball valve (20) in the main piston (3) opens upon pressure impact from the pressure area (5) to the compensation area (17) and closes upon pressure impact in the opposite direction,
- upon introduction of pressure increase in the pressure area (5) firstly the exhaust passage (25) via the stepped piston (23) is closed, secured by a spring (21), and subsequently the dummy piston (9) in the smaller cylinder (8) is displaced by the pressure medium flowing via the ball valve (20), whereby as a result of the higher pressure in the compensation area (17) through the area relationship of the pressure area to the compensation area the ball valve (20) is closed, in such a way that with further pressure increase the main piston (3) applies the friction brake formed with a brake band (14) with torque capacity and upon decompression in the pressure area (5) the stepped piston (23) opens the exhaust passage (25) and the main piston (3) and the dummy piston (9) are restored to their starting position.

2. Hydraulic servo-device with compensation of play according to Claim 1
characterised in that

- the main piston (3) is restored to its starting position through a set of helical return springs (4) and
- the dummy piston (9) is restored to its starting position through a return spring (16).

3. Hydraulic servo-device with compensation of play according to the Claims 1 and 2
characterised in that

- the dummy piston (9) is connected to a piston rod (10), whereby at the connection point the spring (21) formed as a helical spring is positioned for burdening the ball valve (20) in the opening (18) in the main piston (3).

**Revendications**

1. Servodispositif hydraulique avec compensation de course ou de jeu pour freins à friction pour la commutation d'un engrenage automatique de véhicules, avec une chambre de pression (5) formée par un cylindre (2) et un piston principal (3) et une chambre de compensation (17) formée par un cylindre plus petit (8) placé dans le piston principal (3) et par un piston de compensation (9) plus petit, la chambre de compensation étant en liaison avec la chambre de pression (5) par une ouverture (18) contrôlée au moyen d'une soupape à bille (20) chargée par un ressort (21), **caractérisé en ce que:**

- un alésage à gradins (22) reliant la chambre de pression (5) à la chambre de compensation (9) est placé dans le piston principal (3), dans lequel alésage est placé un piston à gradins (23) qui forme une vanne-pilote de sortie (24) pour un canal d'échappement (25) contrôlant un écoulement de liquide de pression hors de la chambre de compensation (17),
- la soupape à bille (20) dans le piston principal (3) s'ouvre lors de l'application d'une pression de la chambre de pression (5) vers la chambre de compensation (17) et se ferme lors d'une application de pression en sens inverse,
- d'abord le canal d'échappement (25) est fermé, avec verrouillage par un ressort (21), par le piston à gradins (23) lors d'une augmentation de pression initiée dans la chambre de pression (5), et qu'ensuite le piston de compensation (9) est déplacé dans le cylindre plus petit (8) par le liquide sous pression entrant par la soupape à bille (20), la soupape à bille (20) étant fermée en raison de la pression plus élevée dans la chambre de compensation (17), due au rapport de surface de la chambre de pression par rapport à la chambre de compensation, de sorte que lorsque la pression continue d'augmenter, le piston principal (3) est appliqué sur un frein à friction formé par une bande à frein (14) avec une capacité de couple, et
- lors de la décompression dans la chambre de pression (5), le piston à gradins (23) ouvre le canal d'échappement (25) et le piston principal (3) et le piston de compensation (9) sont ramenés dans leur position initiale.

2. Servodispositif hydraulique avec compensation de course selon la revendication 1, **caractérisé en ce que** :

- le piston principal (3) est ramené dans sa position initiale par un jeu de ressorts à boudin de rappel (4) et
- le piston de compensation (9) est ramené dans sa position initiale par un ressort de rappel (6).

3. Servodispositif hydraulique avec compensation de course selon les revendications 1 et 2, **caractérisé en ce que :**

- le piston de compensation (9) est relié à une tige de piston (10), le ressort (21) formé comme ressort à boudin étant, au point de raccordement, placé dans l'ouverture (18) du piston principal (3) pour la charge de la soupape à bille (20).

FIG.1

FIG.2

FIG.3